# EUROPEAN PATENT APPLICATION

(11) **EP 4 703 602 A1**
(43) Date of publication of application: **04.03.2026**
(21) Application number: 24796869.6
(22) Date of filing: 16.04.2024
(51) Int. Cl.: F16F 15/32

(54) **BALANCE WEIGHT PRESSURE-BONDING DEVICE AND BALANCE WEIGHT PRESSURE-BONDING METHOD**

(30) Priority: 25.04.2023 JP 2023071713
(71) Applicant: NAGAHAMA SEISAKUSHO LTD., Takatsuki-shi, Osaka 569-1013 (JP)
(72) Inventor: SHIMOKURA, Yoshio, Takatsuki-shi, Osaka 569-1013 (JP); INADA, Keishiro, Takatsuki-shi, Osaka 569-1013 (JP); KIKUCHI, Ryosuke, Takatsuki-shi, Osaka 569-1013 (JP); KUNIMOTO, Takahiro, Takatsuki-shi, Osaka 569-1013 (JP)
(74) Representative: Hasegawa, Kan
(86) International application number: PCT/JP2024/015168
(87) International publication number: WO 2024/225116

(57) **Abstract**

A balance weight pressure-bonding device pressure-bonds, to an inner circumferential surface of a wheel, a balance weight which is to be attached to the inner circumferential surface of the wheel. The balance weight pressure-bonding device includes a pressing member that has a pressing surface arranged to press the balance weight against the inner circumferential surface of the wheel in a state in which the balance weight is sandwiched between the pressing surface and the inner circumferential surface of the wheel, a pressing force sensor that detects a pressing force with which the pressing surface presses the balance weight during pressing of the balance weight by the pressing member, a drive unit that drives the pressing member, and a controller that controls the drive unit. The controller drives the drive unit and causes the pressing surface to press the balance weight against the inner circumferential surface of the wheel and pressure-bond the balance weight to the inner circumferential surface of the wheel, based on detection of the pressing force by the pressing force sensor.

## Description

### Technical Field

The present invention relates to a balance weight pressure-bonding device and a balance weight pressure-bonding method.

### Background Art

Adhesive-bonded balance weights arranged to adjust rotational balance of tire wheels may be attached on inner circumferential surfaces of the wheels on which tires are fitted.

In order to prevent the balance weights from being separated from the wheels after bonding, the balance weights are pressure-bonded to inner circumferential surfaces of rim portions after attachment. As a balance weight pressure-bonding device that pressure-bonds a balance weight, a balance weight pressure-bonding device including a roller is proposed (Patent Literature 1). After the roller is brought close to a rim portion of a wheel to press a part of the balance weight against an inner circumferential surface of the rim portion, the roller is rotated along the inner circumferential surface of the rim portion. This enables the entire balance weight to be pressure-bonded to the inner circumferential surface of the rim portion.

### Citation List

### Patent Literature

Patent Literature 1: Japanese Patent Application Publication No. 2006-266439

### Summary of Invention

### Technical Problem

However, in the balance weight pressure-bonding device described in Patent Literature 1, a pressing force of a pressing member is not controlled during of pressing performed by the pressing member (the roller). Therefore, when the balance weight is pressure-bonded to an inner circumferential surface of the wheel, there is a possibility that the pressing force of the pressing member will vary for each wheel. Alternatively, there is a risk that the balance weight cannot be stably pressure-bonded to the inner circumferential surface of the wheel.

In view of the above circumstances, an object of the present invention is to provide a balance weight pressure-bonding device and a balance weight pressure-bonding method capable of stably pressure-bonding a balance weight to an inner circumferential surface of a wheel.

### Solution to Problem

According to a preferred embodiment of the present invention, there is provided a balance weight pressure-bonding device that pressure-bonds, to an inner circumferential surface of a wheel, a balance weight which is to be attached to the inner circumferential surface of the wheel. The balance weight pressure-bonding device may include a pressing member that has a pressing surface arranged to press the balance weight against the inner circumferential surface of the wheel in a state in which the balance weight is sandwiched between the pressing surface and the inner circumferential surface of the wheel, a pressing force sensor that detects a pressing force with which the pressing surface presses the balance weight during pressing of the balance weight by the pressing member, a drive unit that drives the pressing member, and a controller that controls the drive unit. The controller may drive the drive unit and cause the pressing surface to press the balance weight against the inner circumferential surface of the wheel and pressure-bond the balance weight to the inner circumferential surface of the wheel, based on detection of the pressing force by the pressing force sensor.

According to this configuration, the pressing force sensor detects the pressing force with which the pressing surface presses the balance weight during pressing of the balance weight. Therefore, the balance weight can be pressure-bonded to the inner circumferential surface with a predetermined pressing force. Hence, the balance weight can be stably pressure-bonded to the wheel.

In the preferred embodiment of the present invention, the pressing force sensor includes a force sensor that detects a force received from the inner circumferential surface of the wheel through the balance weight.

According to this configuration, the force sensor is used as the pressing force sensor. The pressing force desired to be detected is a force (a normal force) of a wheel radial component. Since the force sensor is used as the pressing force sensor, the force of the wheel radial component can be successfully detected. This enables the balance weight to be stably pressure-bonded to the wheel.

In the preferred embodiment of the present invention, the controller executes a pressing step of pressing a portion of the balance weight against the inner circumferential surface of the wheel in a state in which the portion of the balance weight is sandwiched between the pressing surface and the inner circumferential surface of the wheel, and detecting a pressing force with which the pressing surface presses the balance weight, and a pressing position moving step of moving, in a circumferential direction of the wheel, a pressing position pressed by the pressing surface on the inner circumferential surface of the wheel through the balance weight while the pressing of the pressing surface against the balance weight is maintained after the pressing step.

According to this configuration, the pressing force when a portion of the balance weight is pressed against the inner circumferential surface of the wheel in the pressing step is detected. Then, in the pressing position moving step, the pressing position pressed by the pressing surface is moved in the circumferential direction of the wheel while the pressing of the pressing surface against the balance weight is maintained. This enables the entire balance weight to be pressure-bonded to the inner circumferential surface of the wheel with a predetermined pressing force. Hence, the entire balance weight can be stably pressure-bonded to the wheel.

In the preferred embodiment of the present invention, the controller starts movement of the pressing position in the pressing position moving step in a case where the pressing force detected by the pressing force sensor in the pressing step falls within a predetermined range.

According to this configuration, in a case where the pressing force detected by the pressing force sensor falls within the predetermined range, the movement of the pressing position is started. Therefore, in the pressing position moving step in which the pressing position is moved in the circumferential direction of the wheel, the pressing surface can press the pressing position with a constant pressing force through the balance weight. This enables the entire balance weight to be pressure-bonded to the inner circumferential surface of the wheel with the constant pressing force. Hence, the entire balance weight can be stably pressure-bonded to the wheel.

In the preferred embodiment of the present invention, the pressing surface is an arc-shaped surface having a curvature radius smaller than a radius of an inner circumference of the wheel and having an arc shape in cross-sectional view. Meanwhile, the drive unit includes a rotation unit that rotates the pressing member around a predetermined rotation axis and a rotation axis moving unit that moves the rotation axis. Meanwhile, the controller executes, in the pressing position moving step, a step of moving the rotation axis along the inner circumferential surface of the wheel while causing the rotation unit to rotate the pressing surface around the rotation axis, and moving the pressing position pressed by the pressing surface in the circumferential direction of the wheel.

According to this configuration, the pressing surface is an arc-shaped surface having a curvature radius smaller than a radius of an inner circumference of the wheel and having an arc shape in cross-sectional view. Meanwhile, while the pressing member is rotated around a predetermined rotation axis, the rotation axis is moved along the inner circumferential surface of the wheel, thereby enabling the pressing position pressed by the pressing surface to be moved in the circumferential direction of the wheel while the pressing of the pressing surface against the balance weight is maintained.

In a case where the pressing surface has a cross sectional arc-shaped surface, corresponding positions of the pressing surface and pressing positions on the inner circumferential surface of the wheel are in one to one correspondence, unlike a case where the pressing member is a roller (see Patent Literature 1). Therefore, even if a portion of the pressing surface is formed with low dimensional accuracy, the portion has little effect on pressure-bonding performed by the pressing surface. This enables the entire balance weight to be pressure-bonded to the inner circumferential surface of the wheel with the constant pressing force. Hence, the entire balance weight can be stably pressure-bonded to the wheel.

In the preferred embodiment of the present invention, the balance weight pressure-bonding device further includes a balance weight holding unit that holds the balance weight on the pressing surface. Meanwhile, the controller attaches the balance weight to the inner circumferential surface and pressure-bonds the attached balance weight to the inner circumferential surface by driving the drive unit to push, against the inner circumferential surface, the balance weight held on the pressing surface.

The balance weight pressure-bonding device may further include a hand having the pressing member and the pressing force sensor, and an arm that supports the hand. Meanwhile, the rotation unit may include a hand rotation unit that rotates the hand about the rotation axis, and the rotation axis moving unit may include a hand moving unit that moves the hand along the inner circumferential surface of the wheel.

In the preferred embodiment of the present invention, there is provided a balance weight pressure-bonding method for pressure-bonding, to an inner circumferential surface of a wheel, a balance weight which is to be attached to the inner circumferential surface of the wheel, by using a balance weight pressure-bonding device including a pressing member that has a pressing surface arranged to press the balance weight against the inner circumferential surface of the wheel in a state in which the balance weight is sandwiched between the pressing surface and the inner circumferential surface of the wheel, a pressing force sensor that detects a pressing force with which the pressing surface presses the balance weight during pressing of the balance weight by the pressing member, and a drive unit that drives the pressing member. The balance weight pressure-bonding method includes driving the drive unit and causing the pressing surface to press the balance weight against the inner circumferential surface of the wheel and pressure-bond the balance weight to the inner circumferential surface of the wheel, based on detection of the pressing force by the pressing force sensor.

### Brief Description of Drawings

FIG. 1 is a perspective view of a balance weight pressure-bonding device in its standby state according to a preferred embodiment of the present invention.
FIG. 2A is a perspective view of the balance weight pressure-bonding device during the attaching and pressure-bonding operation.
FIG. 2B is a perspective view of the balance weight pressure-bonding device during the attaching and pressure-bonding operation.
FIG. 3 is a perspective view of a hand of the balance weight pressure-bonding device.
FIG. 4 is an exploded perspective view of the hand.
FIG. 5 is a view taken in the direction of arrow V in FIG. 3.
FIG. 6 is a cross-sectional view of a principal portion taken along section line VI-VI in FIG. 5.
FIG. 7 is a cross-sectional view of a principal portion taken along section line VII-VII in FIG. 6.
FIG. 8A is a view illustrating a balance weight. FIG. 8B is a view taken in the direction of arrow VIIIB in FIG. 8A.
FIG. 9 is a block diagram illustrating an electrical configuration of the balance weight pressure-bonding device.
FIG. 10 is a cross-sectional view illustrating a state of the hand prior to pressing operation.
FIG. 11 is a cross-sectional view taken along section line XI-XI in FIG. 10.
FIG. 12 is a cross-sectional view illustrating the start of the pressing operation, corresponding to FIG. 10.
FIG. 13 is a cross-sectional view illustrating the start of the pressing operation, corresponding to FIG. 11.
FIG. 14 is a cross-sectional view illustrating a step following that shown in FIG. 13, corresponding to FIG. 11.
FIG. 15 is a cross-sectional view illustrating a step subsequent to that of FIG. 14, corresponding to FIG. 11.

### Description of Embodiments

Preferred embodiments of the present invention will be described in detail with reference to the drawings.

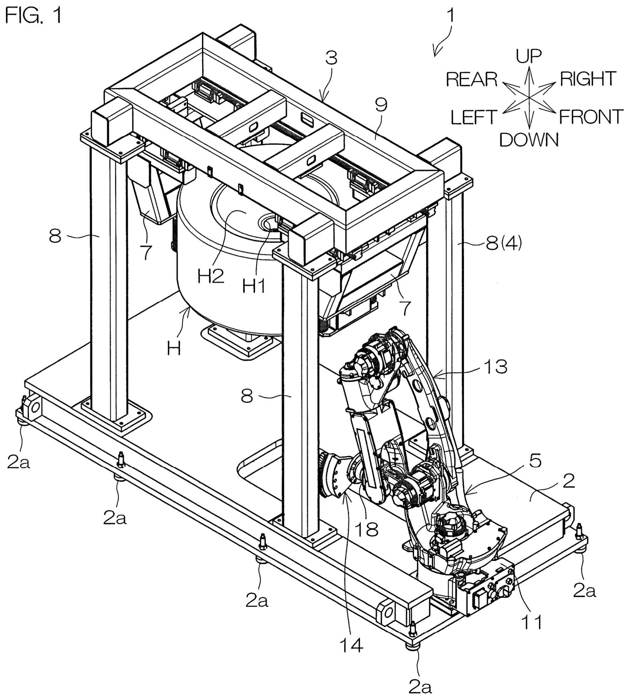

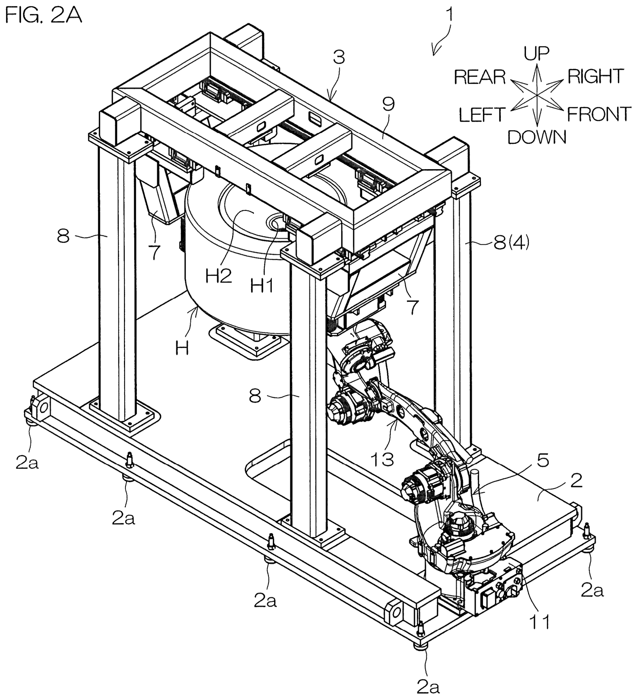

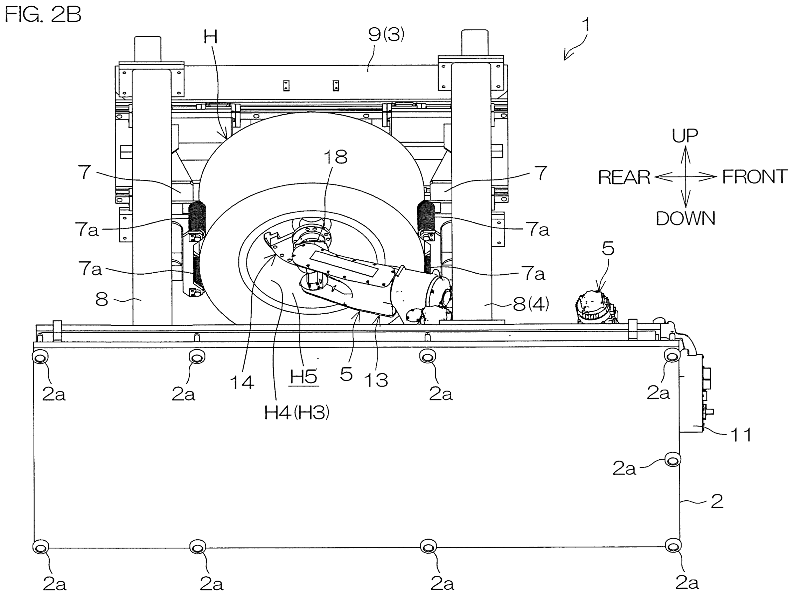

FIG. 1 is a perspective view of a balance weight pressure-bonding/attaching device (balance weight pressure-bonding device) 1 in its standby state according to a preferred embodiment of the present invention. FIGS. 2A and 2B are perspective views of the balance weight attaching/pressure-bonding device 1 during the attaching/pressure-bonding operation.

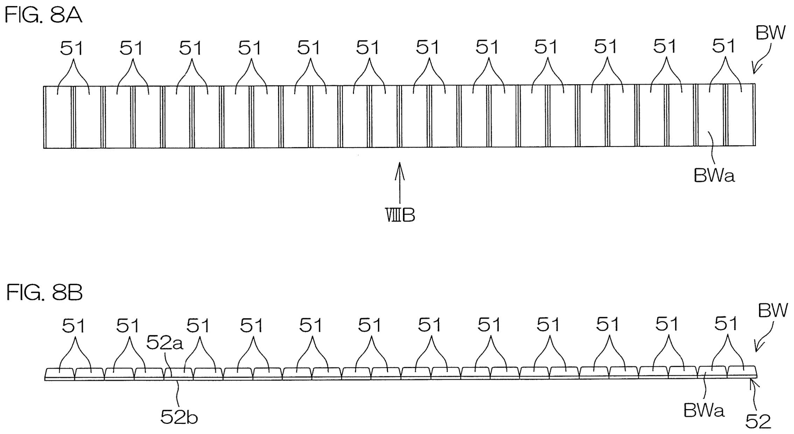

Hereinafter, preferred embodiments of the present invention will be described in detail. The balance weight attaching/pressure-bonding device 1 is a device that attaches a balance weight BW (see FIG. 8) to an inner circumferential surface H4 (see FIG. 2B) of a tire wheel H which is an example of a wheel and firmly presses the attached balance weight BW onto the inner circumferential surface H4.

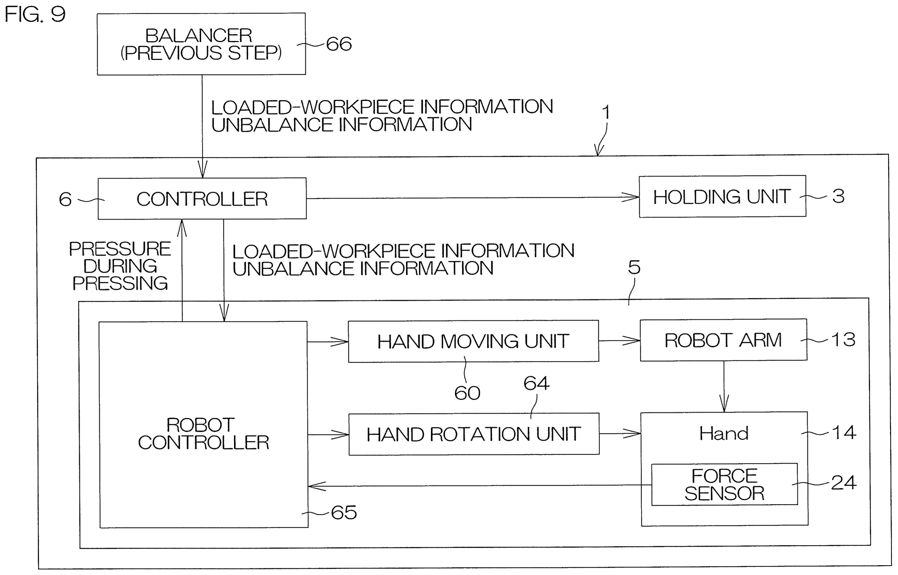

The balance weight attaching/pressure-bonding device 1 includes a base plate 2, a holding unit 3 that holds the tire wheel H at a position above the base plate 2, a support unit 4 that supports the holding unit 3 from below on the base plate 2, an attaching/pressure-bonding robot 5 that attaches the balance weight BW to the inner circumferential surface H4 of the tire wheel H held by the holding unit 3 and pressure-bonds the attached balance weight BW, and a controller 6 (see FIG. 9) that controls the entire operation of the balance weight attaching/pressure-bonding device 1 including the holding unit 3 and the attaching/pressure-bonding robot 5.

The base plate 2 fixed on a floor surface has a rectangular shape in plan view and has a plurality of leg portions 2a. A longitudinal direction of the base plate 2 is considered the front-rear direction, and a width direction of the base plate 2 is considered the left-right direction.

The holding unit 3 includes an upper frame 9 having a quadrangular frame shape and a pair of front and rear clamp pieces 7 attached on the upper frame 9 from below. The base plate 2 has a rectangular shape in plan view. The longitudinal direction of the base plate 2 is the front-rear direction, and the width direction of the base plate 2 is the left-right direction. The pair of clamp pieces 7 are attached on the upper frame 9 to be individually slidable in the front-rear direction. The pair of clamp pieces 7 approach each other and are able to switch between a clamping position where the tire wheel H is clamped and an unclamping position where the pair of clamp pieces 7 are separated from each other. Each of the clamp pieces 7 includes, for example, two contact rollers 7a (see FIG. 2B) at a distal end thereof. Each of the contact rollers 7a is cylindrical with a vertical central shaft. The contact rollers 7a may be rotatable around the respective central shafts or may not be rotatable.

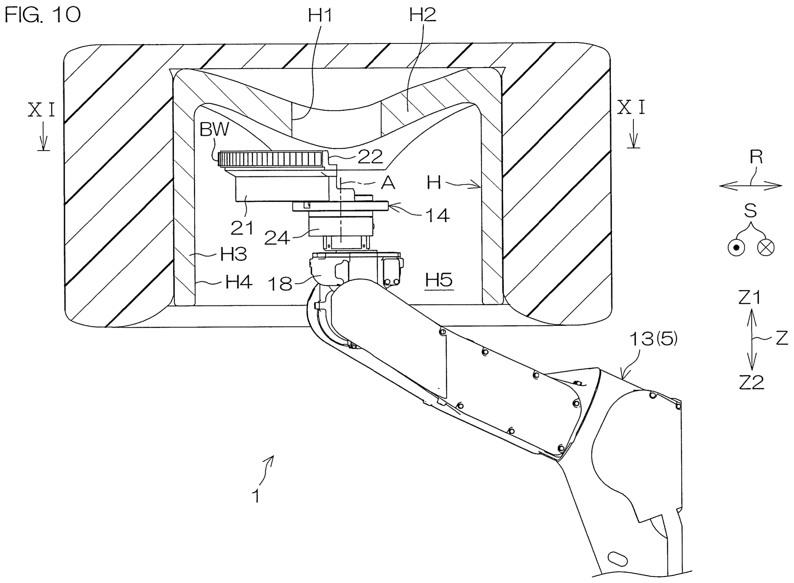

In a clamping state of the holding unit 3, the tire wheel H has a horizontal orientation in which a disk portion H2 having a hub hole H1 faces upward. In this horizontal orientation, an inner space H5 (see also FIG. 10, etc.) of the tire wheel H surrounded by a cylindrical rim portion H3 is open downward. The inner circumferential surface H4 of the tire wheel H is an inner circumferential surface of the rim portion H3 (see FIG. 2B).

The support unit 4 includes a plurality of (for example, four) support rods 8 installed vertically on the base plate 2. A lower end and an upper end of each support rod 8 are coupled to the base plate 2 and the upper frame 9, respectively.

The attaching/pressure-bonding robot 5 is disposed at the front side of the base plate 2. The attaching/pressure-bonding robot 5 performs attachment operation and pressure-bonding operation of the balance weight BW (see FIG. 8) to the tire wheel H attached to the holding unit 3.

As illustrated in FIGS. 1, 2A, and 2B, the attaching/pressure-bonding robot 5 includes a robot base 11 disposed on an upper surface of the base plate 2, a robot arm (arm) 13 attached to the robot base 11, and a hand 14 held at a distal end of the robot arm 13. The robot arm 13 is coupled to the robot base 11 to be rotatable around a vertical axis.

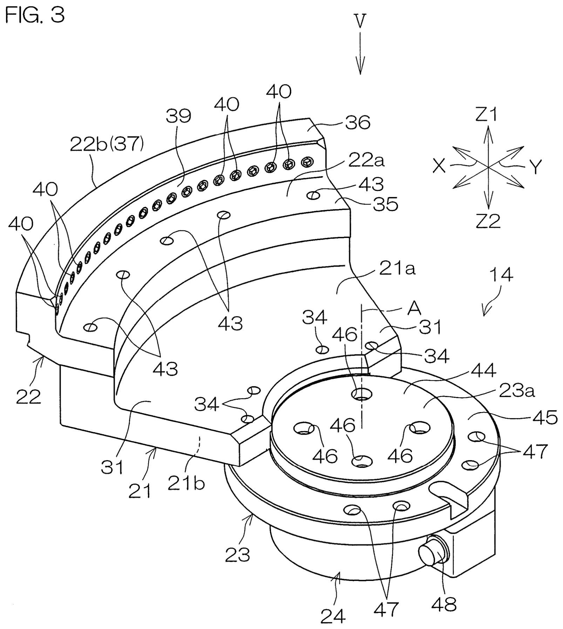

As illustrated in FIGS. 1, 2A, and 2B, the robot arm 13 is an articulated arm. The robot arm 13 has a plurality of links. The robot arm 13 includes a hand rotation base portion 18 (see also FIG. 10) coupled to a distal end portion of the articulated arm. The hand 14 is coupled to the hand rotation base portion 18 to be rotatable around a rotation axis A (see FIG. 3) extending along the distal end portion of the robot arm 13.

As illustrated in FIG. 1, the attaching/pressure-bonding robot 5 further includes a hand moving unit (a rotation axis moving unit, a drive unit) 60 (see FIG. 9) and a hand rotation unit (a rotation unit, a drive unit) 64 (see FIG. 9). The hand moving unit 60 is coupled to the robot arm 13. The hand moving unit 60 includes a plurality of motors, etc.

The hand rotation unit 64 is coupled to the hand 14. The hand rotation unit 64 includes a motor, etc. The hand rotation unit 64 rotates the hand 14 around the rotation axis A with respect to the hand rotation base portion 18.

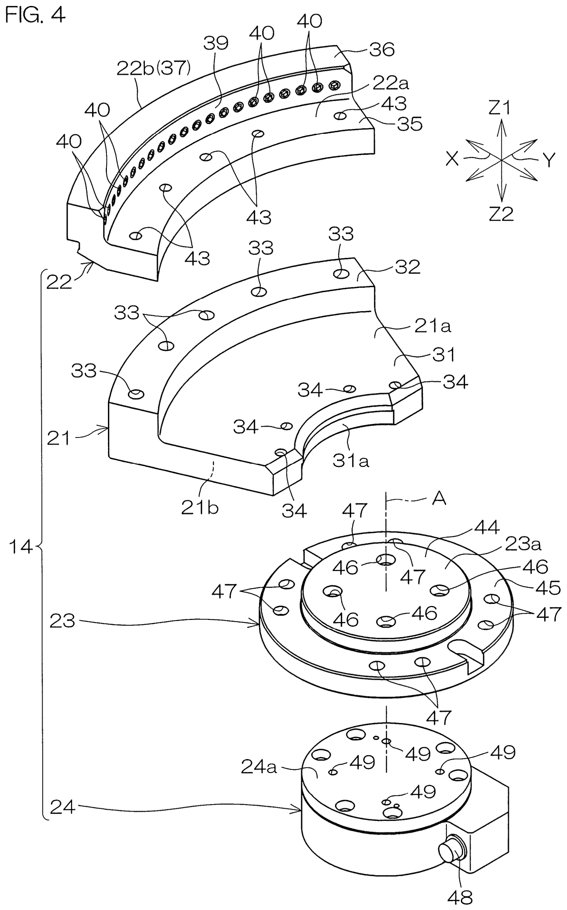

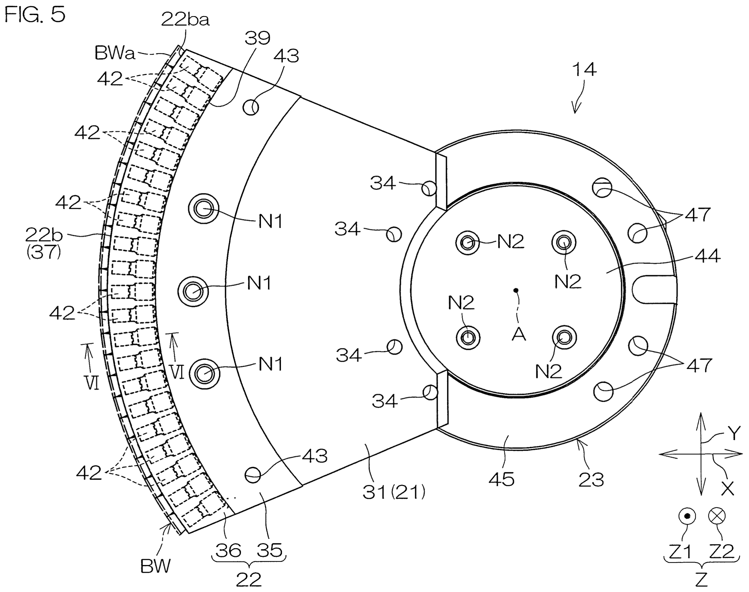

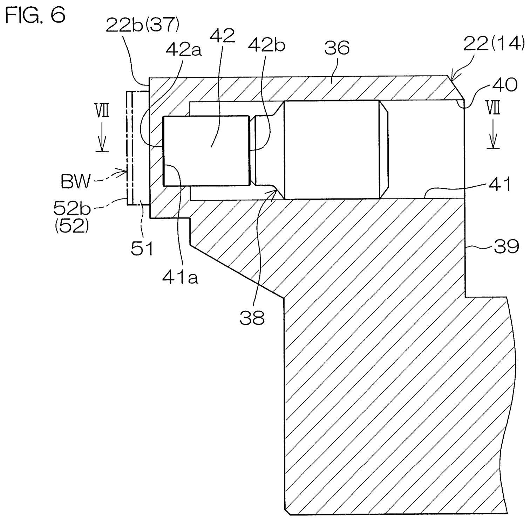

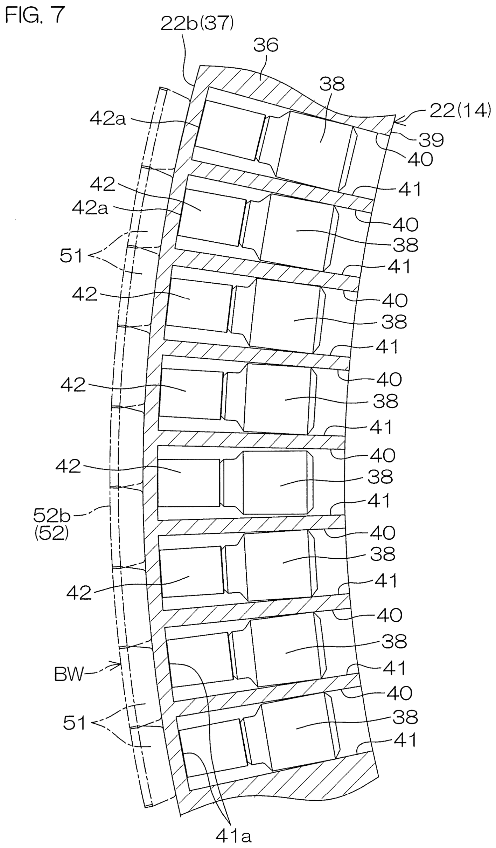

Next, the hand 14 will be described. FIG. 3 is a perspective view of the hand 14 of the balance weight attaching/pressure-bonding device 1. FIG. 4 is an exploded perspective view of the hand 14. FIG. 5 is a view taken in the direction of arrow V in FIG. 3. FIG. 6 is a cross-sectional view of a principal portion taken along section line VI-VI in FIG. 5. FIG. 7 is a cross-sectional view of a principal portion taken along section line VII-VII in FIG. 6.

The hand 14 is designed to adhesive-bond the balance weight BW to the inner circumferential surface H4 of the tire wheel H and pressure-bond the bonded balance weight BW. In this preferred embodiment, the hand 14 is attached to the robot arm 13 through the hand rotation base portion 18.

As illustrated in FIGS. 3 to 5, the hand 14 includes a hand main body 21 with a fan-shaped plate design when viewed from above. The hand main body 21 has a first principal surface 21a and a second principal surface 21b which are both flat. The first principal surface 21a is a principal surface on a first direction Z1 side, and the second principal surface 21b is a principal surface on a second direction Z2 side. Both the first direction Z1 and the second direction Z2 lie along a Z direction (see FIG. 5) which is an axial direction of the rotation axis A and are opposite to each other.

As illustrated in FIG. 4, the hand main body 21 includes an inner circumferential portion 31 fan-shaped in plan view and an outer circumferential portion 32 having an annular shape in plan view. The first principal surface 21a of the hand main body 21 more projects toward the first direction Z1 side at the outer circumferential portion 32 than at the inner circumferential portion 31. A thickness of the outer circumferential portion 32 is larger than a thickness of the inner circumferential portion 31. The inner circumferential portion 31 has a uniform thickness at each portion thereof. The outer circumferential portion 32 has a uniform thickness at each portion thereof.

As illustrated in FIG. 4, a plurality of (for example, five) screw insertion holes 33 extending through the outer circumferential portion 32 in a thickness direction thereof are formed side by side in the outer circumferential portion 32 in a circumferential direction thereof. An inner circumferential edge 31a of the inner circumferential portion 31 of the hand main body 21 has an arc shape concentric with an outer circumferential edge of the outer circumferential portion 32 (that is, an outer circumferential edge of the hand main body 21) and an outer circumferential edge of the inner circumferential portion 31. A plurality of (for example, four) screw holes 34 extending through the inner circumferential portion 31 in a thickness direction thereof are formed side by side along the inner circumferential edge 31a of the inner circumferential portion 31.

As illustrated in FIGS. 3 and 4, the hand 14 further includes a pressing member 22 that has an arc shape in plan view and overlaps the outer circumferential portion 32 of the hand main body 21 on the side of the first direction Z1. The pressing member 22 has a substantially L-shape in cross-sectional view. The pressing member 22 includes an inner circumferential portion 35 having an arc shape in plan view and an outer circumferential portion 36 having an arc shape in plan view. The inner circumferential portion 35 and the outer circumferential portion 36 have a constant width in a radial direction thereof. A principal surface 22a of the pressing member 22 on the side of the first direction Z1 more projects toward the first direction Z1 side at the outer circumferential portion 36 than at the inner circumferential portion 35. A thickness of the outer circumferential portion 36 is larger than a thickness of the inner circumferential portion 35. The inner circumferential portion 35 has a uniform thickness at each portion thereof. The outer circumferential portion 36 has a uniform thickness at each portion thereof. Although not shown in the figures, the hand main body 21 and the pressing member 22 may be integrally formed.

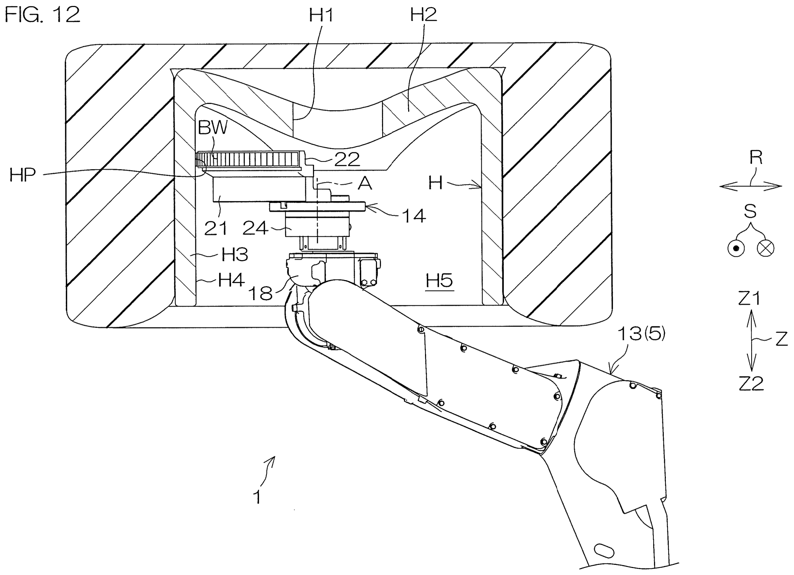

As illustrated in FIGS. 5 to 7, the pressing member 22 includes a pressing surface 22b arranged to press the balance weight BW. In this preferred embodiment, the pressing surface 22b corresponds to an outer circumferential surface 37 of the pressing member 22. Alternatively, the pressing surface 22b is an outer circumferential surface of the outer circumferential portion 36. The outer circumferential surface 37 is an arc-shaped surface around the rotation axis A. Alternatively, the pressing surface 22b is a part in a circumferential direction of a cylindrical surface around the rotation axis A. A curvature radius of the pressing surface 22b may be greater than 1/π of a radius of an inner circumference (the inner circumferential surface H4) of the rim portion H3 of the tire wheel H. In this case, corresponding positions of the pressing surface 22b and pressing positions HP (see FIGS. 12 to 15) on the inner circumferential surface H4 of the tire wheel H can be reliably in one to one correspondence. In addition, the curvature radius of the pressing surface 22b may be greater than a half of the radius of the inner circumference (the inner circumferential surface H4) of the rim portion H3 of the tire wheel H.

As illustrated in FIGS. 5 and 7, an inner circumferential surface 39 of the outer circumferential portion 36 is an arc-shaped surface around the rotation axis A. The inner circumferential surface 39 of the outer circumferential portion 36 has multiple inner openings 40 formed side by side along a circumferential direction thereof. The inner opening 40 is circular in shape. A plurality of accommodation grooves 41 are radially formed (radially around the rotation axis A) inside the outer circumferential portion 36. The plurality of accommodation grooves 41 extend to the vicinity of the inner circumferential surface 39 of the outer circumferential portion 36. A bottom groove 41a of the accommodation groove 41 is demarcated by a thin bottom wall. Each of the accommodation grooves 41 is a round groove having a circular cross section. Permanent magnets 42 are accommodated in the accommodation grooves 41, respectively. Alternatively, a plurality of permanent magnets 42 are housed within the respective accommodation grooves 41.

The permanent magnet 42 may be, for example, a neodymium magnet. The permanent magnet 42 has a columnar shape and has magnetic poles having different polarities on both end surfaces 42a and 42b in a longitudinal direction thereof. Inner circumferential surfaces of the plurality of accommodation grooves 41 are threaded. In a state in which the permanent magnet 42 is accommodated in the accommodation groove 41, a set screw 38 is inserted into the accommodation groove 41 from the inner circumferential surface 39 side, and the set screw 38 is screwed into and fixed within the accommodation groove 41, thereby retaining and positioning the permanent magnet 42. The set screw 38 is, for example, a set screw with a hexagonal socket.

As illustrated in FIG. 4, a plurality of (for example, four) screw holes 43 extending through the inner circumferential portion 35 in a thickness direction thereof are formed side by side in the inner circumferential portion 35 of the pressing member 22 in a circumferential direction thereof. Screws N1 (see FIG. 5) are fastened into the corresponding screw holes 43 through the screw insertion holes 33 of the hand main body 21 from the second direction Z2 side, thereby coupling the hand main body 21 and the pressing member 22.

The hand hand 14 further includes a circular plate member 23, which overlaps the inner circumferential portion 31 of the hand main body 21 on the second direction Z2 side, and a force sensor (pressing force sensor) 24 positioned on the Z2 side of the circular plate member 23.

The circular plate member 23 integrally includes a central portion 44 having a circular shape in plan view and an outer circumferential portion 45 having an annular shape in plan view. A principal surface 23a of the circular plate member 23 projects further toward the first direction Z1 at the central portion 44 than at the outer circumferential portion 45. A thickness of the central portion 44 is larger than a thickness of the outer circumferential portion 45. Alternatively, the thin outer circumferential portion 45 surrounds an outer circumference of the thick central portion 44. An outer circumferential edge of the central portion 44 has a circular shape around the rotation axis A.

A plurality of screw insertion holes 46 extending through the central portion 44 in a thickness direction thereof are formed side by side in the central portion 44 in a circumferential direction thereof. A plurality of screw insertion holes 47 extending through the outer circumferential portion 45 in a thickness direction thereof are formed side by side in the outer circumferential portion 45 in a circumferential direction thereof. In a state in which the inner circumferential edge 31a of the inner circumferential portion 31 opposes an outer circumferential surface of the central portion 44, screws N2 (see FIG. 5) are fastened to the corresponding screw holes 34 through the screw insertion holes 47 from the second direction Z2 side, thereby coupling the hand main body 21 and the circular plate member 23.

The force sensor 24 is coupled to the hand rotation base portion 18 to be rotatable around the rotation axis A through a connection member including a thrust bearing such as a sliding thrust bearing. The force sensor 24 is a six-axis force sensor. The force sensor 24 detects loads in an X-axis direction, a Y-axis direction, and a Z-axis direction which act on the force sensor 24 and detects moments in the X-axis direction, the Y-axis direction, and the Z-axis direction. An X axis and a Y axis are perpendicular to each other. A Z axis is an axis along the rotation axis A and is perpendicular to both the X axis and the Y axis. In this preferred embodiment, the force sensor 24 is a capacitive force sensor, but instead of this, a strain-gauge force sensor, a piezoelectric force sensor, or an optical force sensor may alternatively be used. The force sensor 24 includes a connector portion 48. An electric cable (not illustrated) provided in the attaching/pressure-bonding robot 5 is connected to the connector portion 48.

Namely, the force sensor 24 is disposed between the robot arm 13 and the hand major portions (the hand main body 21, the pressing member 22, and the circular plate member 23), detects a load acting between the robot arm 13 and the main components of the hand, and detects a force generated in the hand 14 (particularly, the pressing member 22), particularly, a load in a direction orthogonal to the inner circumferential surface H4 of the tire wheel H. Specifically, the force sensor 24 detects a normal force which is a force received from the tire wheel H through the balance weight BW. The normal force is a force acting in a direction orthogonal to the inner circumferential surface H4 of the tire wheel H. This normal force is considered to be a pressing force with which the pressing surface 22b of pressing member 22 presses the balance weight BW.

A plurality of screw holes 49 extending through the force sensor 24 in a thickness direction thereof are formed side by side in a principal surface 24a of the force sensor 24 in a circumferential direction thereof. Screws (not illustrated) are fastened to the corresponding screw holes 49 through the screw insertion holes 46 of the circular plate member 23 from the first direction Z1 side, thereby coupling the force sensor 24 and the circular plate member 23.

FIG. 8A is a view illustrating the balance weight BW. FIG. 8B is a view taken in the direction of arrow VIIIB in FIG. 8A. As illustrated in FIGS. 8A and 8B, the balance weight BW includes a plurality of identically-shaped weight portions 51 and a long connection tape 52. Each of the weight portions 51 is made of iron and has an elongated substantially-rectangular parallelepiped shape. The connection tape 52 includes a first surface 52a and a second surface 52b on an opposite side to the first surface 52a. The balance weight BW is formed by aligning and coupling the plurality of weight portions 51 in a longitudinal direction of the connection tape 52 on the first surface 52a of the connection tape 52. An adhesive is applied to the second surface 52b of the connection tape 52. The second surface 52b of the connection tape 52, which has adhesive applied, is pressure-bonded to the inner circumferential surface H4 (see FIG. 2B) of the tire wheel H.

FIG. 9 is a block diagram illustrating an electrical configuration of the balance weight attaching/pressure-bonding device 1. The controller 6 includes, for example, a microcomputer. The controller 6 includes an arithmetic unit such as a CPU, a non-volatile memory device, a storage unit such as a hard disk drive, and an input/output unit. The storage unit stores a program executed by the arithmetic unit.

The holding unit 3 and the attaching/pressure-bonding robot 5 are connected as control targets to the controller 6. Information about a workpiece (the tire wheel H) loaded into the balance weight attaching/pressure-bonding device 1 is provided to the controller 6. This information includes loaded-workpiece information and unbalance information. The loaded-workpiece information includes size information such as an inner diameter of the workpiece (the tire wheel H). The unbalance information is information including both an unbalance position and an unbalance amount of the workpiece (the tire wheel H).

The attaching/pressure-bonding robot 5 includes a robot controller 65. The robot controller 65 includes, for example, a microcomputer. The robot controller 65 controls the hand moving unit 60 and the hand rotation unit 64. The robot controller 65 is programmed so that the hand 14 executes a series of pressing operations. Information about the workpiece (the tire wheel H), which is the target for attaching and pressure-bonding of the balance weight BW, is provided from the controller 6 to the attaching/pressure-bonding robot 5.

The robot controller 65 is configured to receive detection output from the force sensor 24. The robot controller 65 monitors the detection output from the force sensor 24. The robot controller 65 controls attachment operation and pressure-bonding operation of the balance weight BW to the workpiece (the tire wheel H) on the basis of the detection output of the force sensor 24. In addition, a pressing force (pressure at the time of pressing) during pressure-bonding of the balance weight BW is sent from the robot controller 65 to the controller 6.

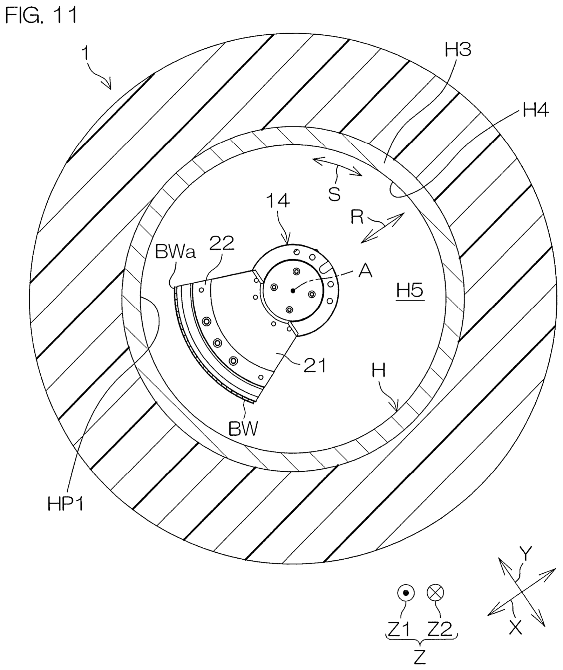

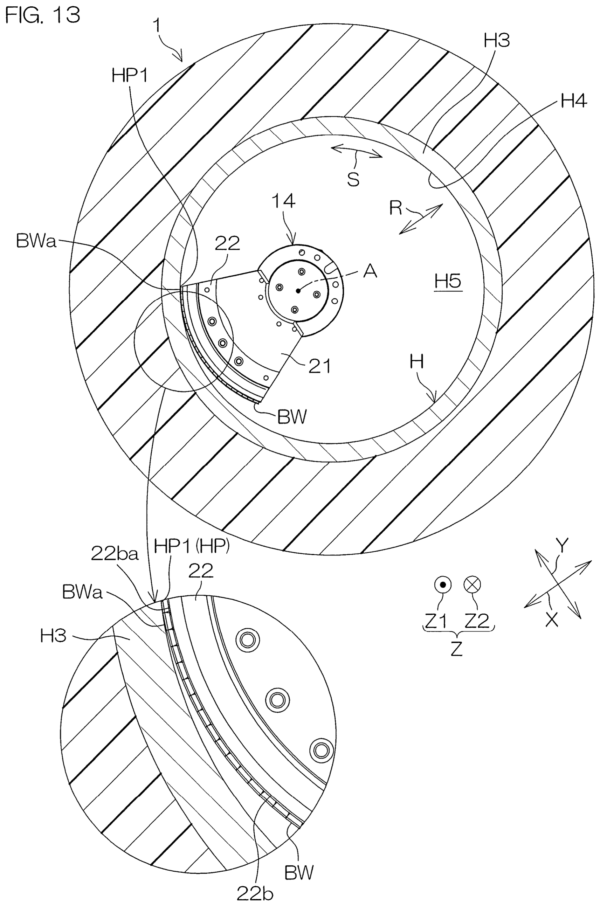

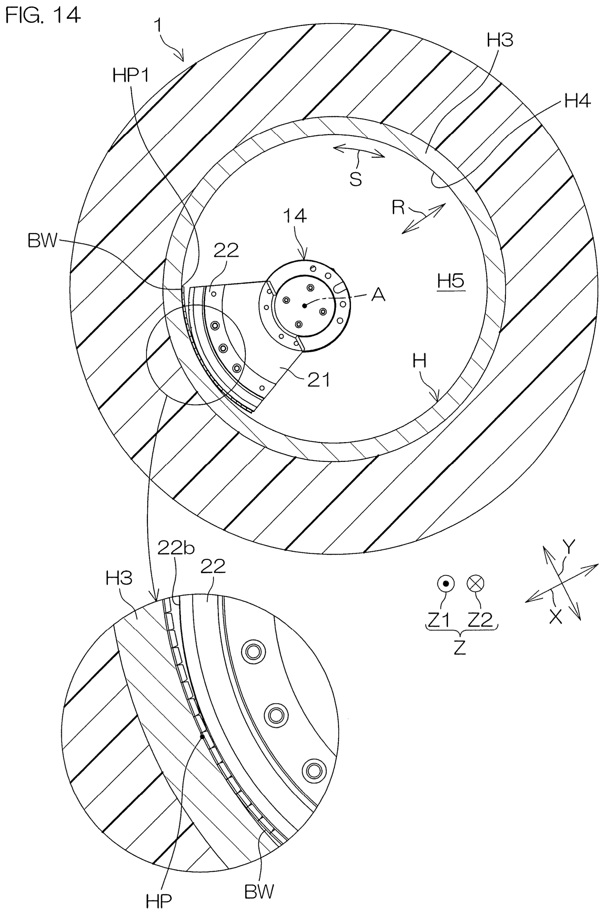

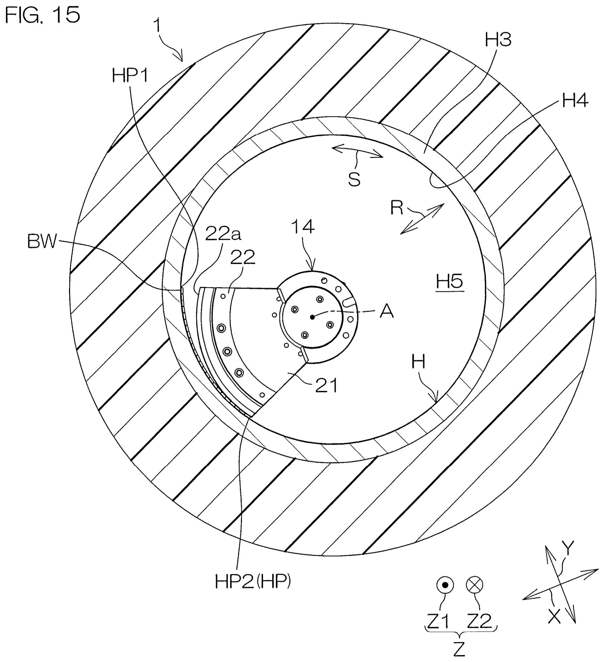

FIG. 10 is a cross-sectional view illustrating a state of the hand 14 prior to the pressing operation. FIG. 11 is a cross-sectional view taken along section line XI-XI in FIG. 10. FIGS. 10 and 11 illustrate an identical state as that of FIGS. 2A and 2B. FIG. 12 is a cross-sectional view illustrating the start of the pressing operation, corresponding to FIG. 10. FIG. 13 is a cross-sectional view illustrating the start of the pressing operation, corresponding to FIG. 11. FIG. 14 is a cross-sectional view illustrating a state during the pressing operation, corresponding to FIG. 11. FIG. 15 is a cross-sectional view illustrating the end of the pressing operation, corresponding to FIG. 11.

The attachment and the pressure-bonding of the balance weight BW using the balance weight attaching/pressure-bonding device 1 will be described with reference to FIGS. 1, 2A, 2B, and 9 to 15. The attachment and the pressure-bonding are performed by pushing the balance weight BW to the inner circumferential surface H4 of the rim portion H3 of the tire wheel H using the hand 14 (the pressing member 22), rotating the hand 14 while maintaining the pushing state, and moving the rotation axis A of the hand 14 along the inner circumferential surface H4. In this description, a series of operations from a start of pushing to an end of rotating of the hand 14 is referred to as the "pressing operation."

As illustrated in FIGS. 1, 2A, and 2B, the tire wheel H whose rotational balance has been measured by a balancer 66 (see FIG. 9) in the previous step of a manufacturing line is loaded into the balance weight attaching/pressure-bonding device 1 by a conveyance device (not illustrated). Meanwhile, the tire wheel H is delivered to the holding unit 3 in a state in which the tire wheel H is laid substantially horizontally so that the disk portion H2, in which the hub hole H1 is formed, is positioned on an upper side, and the tire wheel H is held by the holding unit 3. Specifically, the controller 6 moves the pair of front and rear clamp pieces 7 from the unclamping position to the clamping position, so that the tire wheel H is clamped by the holding unit 3, and the tire wheel H is positioned. In this state, the inner space H5 of the tire wheel H is open downward.

In this preferred embodiment, before the tire wheel H is loaded into the balance weight attaching/pressure-bonding device 1, the balance weight BW which is a target of attachment and the pressure-bonding is held on the pressing surface 22b of the pressing member 22, which is part of the hand 14 of the attaching/pressure-bonding robot 5, by magnetic attraction. The permanent magnet 42 is part of the holding unit that holds the balance weight BW on the pressing surface 22b. The balance weight BW held on the pressing surface 22b is indicated by a dash-dotted line in FIGS. 6 and 7. The balance weight BW may be attached to the pressing surface 22b automatically or manually using a balance weight supply device (not illustrated).

As illustrated in FIGS. 9 to 11, the controller 6 receives, from the balancer 66 in the previous step, the loaded-workpiece information and the unbalance information about the balance weight BW (the workpiece) loaded into the balance weight attaching/pressure-bonding device 1. The controller 6 provides the received loaded-workpiece information and unbalance information to the robot controller 65.

The robot controller 65 controls the hand moving unit 60 to make the hand 14 enter the inner space H5 of the tire wheel H from below, and to orient the hand 14 parallel to the inner circumferential surface H4 (in an example of FIG. 10, the rotation axis A is matched with a vertical direction). Meanwhile, the robot controller 65 controls the hand rotation unit 64 to make the pressing surface 22b oppose the inner circumferential surface H4 of the tire wheel H. Specifically, the robot controller 65 rotates the hand 14 around the rotation axis A, thereby making one end portion 22ba of the pressing surface 22b (see FIGS. 5 and 13, that is, one end portion BWa of the balance weight BW held on the pressing surface 22b) oppose a start position HP1 on the inner circumferential surface H4. The robot controller 65 determines an attachment region of the balance weight BW on the inner circumferential surface H4 based on the unbalance information (an unbalance position and an unbalance amount) measured in the previous step. In this preferred embodiment, the start position HP1 is one end of the attachment region in a circumferential direction S on the inner circumferential surface H4, and an end position HP2 is the other end of the attachment region in the circumferential direction S on the inner circumferential surface H4.

Thereafter, the robot controller 65 controls the hand moving unit 60 to move the hand 14 so that the hand 14 approaches the start position HP1. As illustrated in FIGS. 12 and 13, the one end portion BWa of the balance weight BW eventually comes into contact with the start position HP1 of the pressing position HP on the inner circumferential surface H4. This contact results in attachment of the one end portion BWa of the balance weight BW to the inner circumferential surface H4.

As illustrated in FIGS. 12 and 13, even after the contact with the balance weight BW, push-in of the hand 14 is continued. As a push-in amount of the hand 14 increases, a load applied from the pressing surface 22b to the one end portion BWa of the balance weight BW increases. Therefore, in a state in which the one end portion BWa of the balance weight BW is sandwiched between the pressing surface 22b and the inner circumferential surface H4 of the tire wheel H, the one end portion BWa of the balance weight BW is pressed against the inner circumferential surface H4 of the tire wheel H (a pressing step).

In the pressing step, the load applied to the one end portion BWa of the balance weight BW is detected by the force sensor 24. The robot controller 65 constantly monitors the detection output of the force sensor 24. Based on the detection output of the force sensor 24, the robot controller 65 can detect loads in the X-axis, Y-axis, and Z-axis directions with respect to the load applied to the balance weight BW. The robot controller 65 detects a load component (a normal force) of a component in a radial direction R of the inner circumferential surface H4 based on the loads in the three axial directions. As described above, this normal force is considered to be a pressing force with which the pressing surface 22b of the pressing member 22 presses the balance weight BW.

The pressing step is continued until a detected load based on the force sensor 24 exceeds a predetermined threshold (for example, about 80 N). The pressing surface 22b presses the one end portion BWa with a pressing force to such a degree that the threshold of the detected load is reached, thereby pressure-bonding the one end portion BWa of the balance weight BW to the inner circumferential surface H4. Since a pressure-bonding force to the inner circumferential surface H4 is high, an adhesive force of the balance weight BW to the inner circumferential surface H4 can increase. In this state, the adhesive force of the balance weight BW exceeds a magnetic attraction force of the balance weight BW to the pressing surface 22b. In this state, the balance weight BW becomes detachable from the pressing surface 22b to which the balance weight is attracted and held.

When the detected load based on the force sensor 24 exceeds the predetermined threshold, as illustrated in FIG. 14, the pressing position HP starts to be moved from the start position HP1 toward the end position HP2 separated from the start position HP1 by a predetermined space in the circumferential direction S (a start of a pressing position moving step). Specifically, the robot controller 65 controls the hand moving unit 60 to rotate the hand 14 (that is, the pressing surface 22b) around the rotation axis A, thereby moving the rotation axis A along the inner circumferential surface H4. This enables the pressing position HP to be moved on the inner circumferential surface H4 along the circumferential direction S of the tire wheel H toward the end position HP2 on a surface of the balance weight BW facing an inner circumferential side (pressing position moving step).

The movement of the pressing position HP is performed in a state in which a push-in amount by the pressing surface 22b is maintained. Alternatively, the pressing position HP is moved while the pressing force toward the pressing position HP is maintained constant. A portion of the balance weight BW through which the pressing position HP passes is separated from the pressing surface 22b. The pressing position HP is moved from the start position HP1 to the end position HP2, thereby enabling the balance weight BW to be pressure-bonded over a region from the start position HP1 to the end position HP2 on the inner circumferential surface H4. FIG. 15 illustrates a state in which the pressing position HP is disposed at the end position HP2.

When the pressing position HP reaches the end position HP2, the robot controller 65 controls the hand moving unit 60 to stop the rotation of the hand 14 (i.e., the pressing surface 22b). In addition, the robot controller 65 controls the hand moving unit 60 to retract the hand 14 from the inner circumferential surface H4. This completes the attachment and the pressure-bonding of the balance weight BW to the inner circumferential surface H4.

The robot controller 65 provides the pressing force (the detected load based on the force sensor 24) in the pressing step to the controller 6. The controller 6 stores this pressing force in a log file in the storage unit.

Thereafter, the tire wheel H to which the balance weight BW has been pressure-bonded, is removed from the balance weight attaching/pressure-bonding device 1 by a conveyance device (not illustrated).

As described above, according to this preferred embodiment, the force sensor 24 detects the pressing force with which the pressing surface 22b presses the balance weight BW during pressing of the balance weight BW. Meanwhile, the robot controller 65 pushes the balance weight BW to the inner circumferential surface H4 of the tire wheel H, based on the load detected by the force sensor 24. This enables the balance weight BW to be pressure-bonded to the inner circumferential surface H4 of the tire wheel H. Therefore, the balance weight BW can be pressure-bonded to the inner circumferential surface H4 of the tire wheel H with a predetermined pressing force. This enables the balance weight BW to be stably pressure-bonded to the tire wheel H. Hence, an adhesive effect of an adhesive of the connection tape 52 of the balance weight BW can be effectively maintained.

In addition, since the force sensor 24 is used as the pressing force sensor, the force (the normal force) of the component in the radial direction of the tire wheel H can be successfully detected. This enables the balance weight BW to be stably pressure-bonded to the tire wheel H regardless of a pressure-bonding position of the inner circumferential surface H4 of the tire wheel H or dimensional accuracy of the inner circumferential surface H4 of the tire wheel H.

In addition, the force sensor 24 detects a pressing force when the one end portion (the one portion) BWa of the balance weight BW is pressed against the inner circumferential surface H4 of the tire wheel H in the pressing step. Meanwhile, in the pressing position moving step, the pressing position HP pressed by the pressing surface 22b is moved in the circumferential direction S of the tire wheel H while maintaining the contact pressure of the pressing surface 22b against the balance weight BW (i.e., maintaining the insertion depth).

In addition, in a case where the pressing force detected by the force sensor 24 falls within a predetermined range, the movement of the pressing position HP is started. Therefore, the pressing position HP can be moved in the circumferential direction S of the tire wheel H while the pressing position HP is pressed by the pressing surface 22b with a constant pressing force through the balance weight BW. This enables the entire balance weight BW to be pressure-bonded to the inner circumferential surface H4 of the tire wheel H with the constant pressing force. Hence, the entire balance weight BW can be stably pressure-bonded to the tire wheel H.

In addition, since the pressing surface 22b includes a magnetic force holding surface that magnetically attracts the balance weight BW, the balance weight BW can be magnetically attracted to the pressing surface 22b. The balance weight BW is held on the pressing surface 22b in advance, thereby enabling the attachment of the balance weight BW to the inner circumferential surface H4 of the tire wheel H and the pressure-bonding of the balance weight BW to the inner circumferential surface H4 of the tire wheel H to be achieved in a single pressing operation using the hand 14.

In general, the attachment of the balance weight BW is performed manually by an operator. In addition, the attachment region of the balance weight BW varies depending on the unbalance position (phase) and the unbalance amount of the tire wheel H. Since the operator visually checks the attachment region, there is a possibility that the balance weight BW cannot be accurately attached to an intended attachment region. In addition, there is a need to automate the attachment of the balance weight BW since there may be a labor shortage due to a decrease in the working population in the future.

On the other hand, in this preferred embodiment, the balance weight attaching/pressure-bonding device 1 performs not only the pressure-bonding operation of the balance weight BW to the inner circumferential surface H4 of the tire wheel H but also the attachment operation of the balance weight BW to the inner circumferential surface H4. Hence, the balance weight BW can be accurately attached to the intended attachment region. In addition, automation of this process helps address potential labor shortages in the future.

Although the preferred embodiment of the present invention has been described above, the present invention may be implemented in other embodiments. For example, in the preferred embodiment above, the tire wheel H is held by the holding unit 3 in a state in which the disk portion H2 is positioned on the upper side, but the orientations of the tire wheel H held by the holding unit 3 may be inverted. Namely, a configuration may be employed, in which the balance weight BW is pressure-bonded to the rim portion H3 with the tire wheel H positioned so that the disk portion H2 faces downward and the inner space H5 opens upward. In this case, the hand 14 is configured to advance and retract from above with respect to the inner space H5 of the tire wheel H.

In addition, in the preferred embodiment above, the pressing surface 22b is the magnetic attraction surface, thereby holding the balance weight BW on the pressing surface 22b in advance. However, the pressing surface 22b may not be a magnetic attraction surface. In this case, the balance weight BW is attached to a position designated on the inner circumferential surface H4 of the rim portion H3 in advance by manual operation performed by the operator, and the pressing operation above using the hand 14 is performed on the balance weight BW, thereby pressure-bonding the balance weight BW to the tire wheel H. In this case, the balance weight attaching/pressure-bonding device 1 and the attaching/pressure-bonding robot 5 perform only the pressure-bonding operation and do not perform the attachment operation. At this time, the balance weight attaching/pressure-bonding device 1 and the attaching/pressure-bonding robot 5 function only as a balance weight pressure-bonding device and a pressure-bonding robot, respectively.

In addition, although the tire wheel H has been described as an example, the balance weight BW may be pressure-bonded to a wheel before the tire is mounted, using the balance weight attaching/pressure-bonding device 1.

In addition, although the pressing force sensor has been described as the force sensor 24, a load applied from the pressing surface 22b to the balance weight BW may be detected using another pressure sensor. Alternatively, another pressure sensor may be used as the pressing force sensor.

In addition, although the description assumes that one end portion BWa of the balance weight BW is first pressed against the inner circumferential surface H4, another portion of the balance weight BW (for example, a central portion of the balance weight BW along its longitudinal direction) may instead be pressed first against the inner circumferential surface H4.

In addition, the load detection performed by the force sensor 24 may be performed not only in the pressing step but also in the pressing position moving step.

The following appended features can be further extracted from the descriptions in this Description and the drawings.

### [Appendix]

A balance weight pressure-bonding device (1) that pressure-bonds a balance weight (BW) to an inner circumferential surface (H4) of a wheel (H), the balance weight pressure-bonding device (1) comprising:
a pressing member (22) having a pressing surface (22b) that has an arc-shaped surface having a curvature radius smaller than a radius of an inner circumference of the wheel and having an arc shape in cross-sectional view, the pressing surface pressing a portion of the balance weight against the inner circumferential surface of the wheel in a state in which the portion of the balance weight is sandwiched between the pressing surface and the inner circumferential surface of the wheel; and
a pressing position moving unit (60, 64) that pressure-bonds the balance weight to the inner circumferential surface of the wheel by moving, in a circumferential direction of the wheel, a pressing position pressed by the pressing surface on the inner circumferential surface of the wheel through the balance weight,
wherein the pressing position moving unit includes a rotation unit (64) that rotates the pressing member around a predetermined rotation axis, and a rotation axis moving unit (60) that moves, together with rotation of the pressing member, the rotation axis along the inner circumferential surface of the wheel while maintaining application of the pressing force to the pressing position.

The present application corresponds to Japanese Patent Application No. 2023-71713 filed on April 25, 2023 in the Japan Patent Office, and the entire disclosure of this application is incorporated herein by reference.

### Reference Signs List

1: Balance weight attaching/pressure-bonding device (balance weight pressure-bonding device)
13: Robot arm (arm)
14: Hand
22: Pressing member
22b: Pressing surface
24: Force sensor (pressing force sensor)
42: Permanent magnet (holding unit)
60: Hand moving unit (rotation axis moving unit, drive unit)
64: Hand rotation unit (rotation unit, drive unit)
65: Robot controller (controller)
BW: Balance weight
BWa: One end portion (one portion)
H: Tired wheel
H4: Inner circumferential surface
HP: Pressing position

## Claims

1. A balance weight pressure-bonding device that pressure-bonds, to an inner circumferential surface of a wheel, a balance weight which is to be attached to the inner circumferential surface of the wheel, the balance weight pressure-bonding device comprising:
a pressing member that has a pressing surface arranged to press the balance weight against the inner circumferential surface of the wheel in a state in which the balance weight is sandwiched between the pressing surface and the inner circumferential surface of the wheel;
a pressing force sensor that detects a pressing force with which the pressing surface presses the balance weight during pressing of the balance weight by the pressing member;
a drive unit that drives the pressing member; and
a controller that controls the drive unit,
wherein the controller drives the drive unit and causes the pressing surface to press the balance weight against the inner circumferential surface of the wheel and pressure-bond the balance weight to the inner circumferential surface of the wheel, based on detection of the pressing force by the pressing force sensor.

2. The balance weight pressure-bonding device according to claim 1, wherein the pressing force sensor includes a force sensor that detects a force received from the inner circumferential surface of the wheel through the balance weight.

3. The balance weight pressure-bonding device according to claim 1 or 2, wherein the controller executes a pressing step of pressing a portion of the balance weight against the inner circumferential surface of the wheel in a state in which the portion of the balance weight is sandwiched between the pressing surface and the inner circumferential surface of the wheel, and detecting a pressing force with which the pressing surface presses the balance weight, and a pressing position moving step of moving, in a circumferential direction of the wheel, a pressing position pressed by the pressing surface on the inner circumferential surface of the wheel through the balance weight while the pressing of the pressing surface against the balance weight is maintained after the pressing step.

4. The balance weight pressure-bonding device according to claim 3, wherein the controller starts movement of the pressing position in the pressing position moving step in a case where the pressing force detected by the pressing force sensor in the pressing step falls within a predetermined range.

5. The balance weight pressure-bonding device according to claim 3 or 4, wherein
the pressing surface is an arc-shaped surface having a curvature radius smaller than a radius of an inner circumference of the wheel and having an arc shape in cross-sectional view,
the drive unit includes a rotation unit that rotates the pressing member around a predetermined rotation axis and a rotation axis moving unit that moves the rotation axis, and
the controller executes, in the pressing position moving step, a step of moving the rotation axis along the inner circumferential surface of the wheel while causing the rotation unit to rotate the pressing surface around the rotation axis, and moving the pressing position pressed by the pressing surface in the circumferential direction of the wheel.

6. The balance weight pressure-bonding device according to any one of claims 1 to 5, further comprising a holding unit that holds the balance weight on the pressing surface,
wherein the controller attaches the balance weight to the inner circumferential surface and pressure-bonds the attached balance weight to the inner circumferential surface by driving the drive unit to push, against the inner circumferential surface, the balance weight held on the pressing surface.

7. A balance weight pressure-bonding method for pressure-bonding, to an inner circumferential surface of a wheel, a balance weight which is to be attached to the inner circumferential surface of the wheel, by using a balance weight pressure-bonding device including a pressing member that has a pressing surface arranged to press the balance weight against the inner circumferential surface of the wheel in a state in which the balance weight is sandwiched between the pressing surface and the inner circumferential surface of the wheel, a pressing force sensor that detects a pressing force with which the pressing surface presses the balance weight during pressing of the balance weight by the pressing member, and a drive unit that drives the pressing member, the balance weight pressure-bonding method comprising:
driving the drive unit and causing the pressing surface to press the balance weight against the inner circumferential surface of the wheel and pressure-bond the balance weight to the inner circumferential surface of the wheel, based on detection of the pressing force by the pressing force sensor.
